# EUROPÄISCHE PATENTSCHRIFT

(11) **EP 0 944 947 B1**
(45) Veröffentlichungstag und Bekanntmachung des Hinweises auf die Patenterteilung: **13.06.2001**
(21) Anmeldenummer: 97953706.5
(22) Anmeldetag: 27.11.1997
(51) Int. Cl.: H02K 1/17

(54) **ELEKTROMOTOR**
ELECTRIC MOTOR
MOTEUR ELECTRIQUE

(30) Priorität: 14.12.1996 DE 19652085
(43) Veröffentlichungstag der Anmeldung: 29.09.1999
(73) Patentinhaber: Mannesmann VDO Aktiengesellschaft, 60388 Frankfurt am Main (DE)
(72) Erfinder: VOGLER, Hans-Ulrich, D-60316 Frankfurt am Main (DE)
(74) Vertreter: Klein, Thomas, Dipl.-Ing. (FH)
(86) Internationale Anmeldenummer: EP9706609
(87) Internationale Veröffentlichungsnummer: WO9827637

(56) Entgegenhaltungen:
- EP-A- 0 334 662
- FR-A- 2 700 077
- GB-A- 2 209 880

## Beschreibung

Die Erfindung betrifft einen Elektromotor mit einem zwei Magnetschalen aufweisenden Stator und einem Federelement, welches zur Vorspannung der Magnetschalen des Stators gegen einen feststehenden Anschlag ausgebildet ist, wobei das Federelement an jeder Magnetschale einen Anlagepunkt aufweist und die Anlagepunkte zur Einleitung der Federkraft des Federelementes in die zwei Magnetschalen gegen den feststehenden Anschlag dienen. Ein solcher Motor ist aus der GB-A-2 209 880 bekannt.

Solche Elektromotoren werden insbesondere in Kraftfahrzeugen häufig eingesetzt und sind damit bekannt. In der Regel hat der Elektromotor als Stator zwei halbschalenförmige Magnetschalen, die an einer äußeren Wandung des Gehäuses des Elektromotors und mit ihren Rändern jeweils an Anschlägen anliegen. Zwischen den Magnetschalen ist das Federelement angeordnet und spannt die Magnetschalen gleichzeitig gegen ihre Anschläge vor. Das Federelement eines aus der Praxis bekannten Elektromotors ist als V-förmig gebogener Bandstahl ausgebildet.

Nachteilig bei dem bekannten Elektromotor ist, daß sich das Federelement an zwei einander gegenüberliegenden Anlagepunkten abstützt und daher kippen kann. Im ungünstigsten Fall führt das Kippen des Federelementes zu einem Blockieren eines sich zwischen den Magnetschalen drehenden Rotors. Zur Vermeidung eines Kippens muß das Federelement daher aufwendig abgestützt werden. Weiterhin haben die Magnetschalen beispielsweise bei Kleinmotoren von Stellgliedern eines Kraftfahrzeuges Toleranzen, die zu einer Veränderung des Klemmbereiches der Feder von über 3 mm führen. Das Federelement muß bei größter Spalttoleranzspanne eine Grundkraft zum sicheren Halt bringen. Aufgrund der großen Spalttoleranzspanne ist dann aber bei vorkommender Kleinsttoleranzspanne in Verbindung mit der Steifigkeit des Federelementes dessen Haltekraft sehr hoch. Je weicher die Feder aber sein kann, umso günstiger ist es.

Der Erfindung liegt das Problem zugrunde, einen Elektromotor der eingangs genannten Art so zu gestalten, daß ein Kippen des Federelementes ohne aufwendige Abstützung vermieden wird und daß sich der Elektromotor besonders einfach montieren läßt.

Dieses Problem wird erfindungsgemäß dadurch gelöst, daß das Federelement an einer der Magnetschalen einen zweiten Anlagepunkt aufweist und an der anderen Magnetschale zumindest einen Anlagepunkt aufweist.

Hierdurch liegt das Federelement zuverlässig mit zumindest drei Anlagepunkten an den beiden Magnetschalen an. Ein Kippen des Federelementes wird deshalb ohne eine zusätzliche Abstützung ausgeschlossen.

Das Federelement kann durch die erfindungsgemäße Gestaltung eine geringere Federsteifigkeit aufweisen als das V-förmige Federelement des bekannten Elektromotors. Hierdurch läßt sich der Elektromotor besonders einfach montieren.

Die Sicherheit gegen ein Kippen des Federelementes ist gemäß einer vorteilhaften Weiterbildung der Erfindung besonders hoch, wenn es auf beiden Seiten jeweils zwei Anlagepunkte aufweist. Weiterhin ermöglicht diese Gestaltung die Verwendung eines Federelementes mit einer besonders geringen Steifigkeit, da mehr federnde Länge im Bauraum fixiert ist.

Das Federelement ist gemäß einer anderen vorteilhaften Weiterbildung der Erfindung besonders kostengünstig herstellbar, wenn es aus einem drahtförmigen Federmaterial gefertigt ist.

Das Federelement benötigt gemäß einer anderen vorteilhaften Weiterbildung der Erfindung keine Verdrehsicherung an den Magnetschalen, wenn es aus einem bandförmigen Federmaterial gefertigt ist.

Das Federelement könnte mit einem Endbereich an der einen Magnetschale und mit dem anderen Endbereich an der anderen Magnetschale anliegen. Das Federelement weist jedoch einen großen Spannbereich auf und kann mit einer niedrigen Federsteifigkeit ausgebildet werden, wenn es gemäß einer anderen vorteilhaften Weiterbildung der Erfindung jeweils mit seinen Endbereichen an einer der Magnetschalen anliegt. Hierdurch wird die Montage des erfindungsgemäßen Elektromotors weiter vereinfacht.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Figur 1: eine Schnittdarstellung eines erfindungsgemäßen Elektromotors,
- Figur 2: eine Draufsicht eines Federelementes des Elektromotors aus Figur 1,
- Figur 3: eine weitere Ausführungsform des Federelementes.

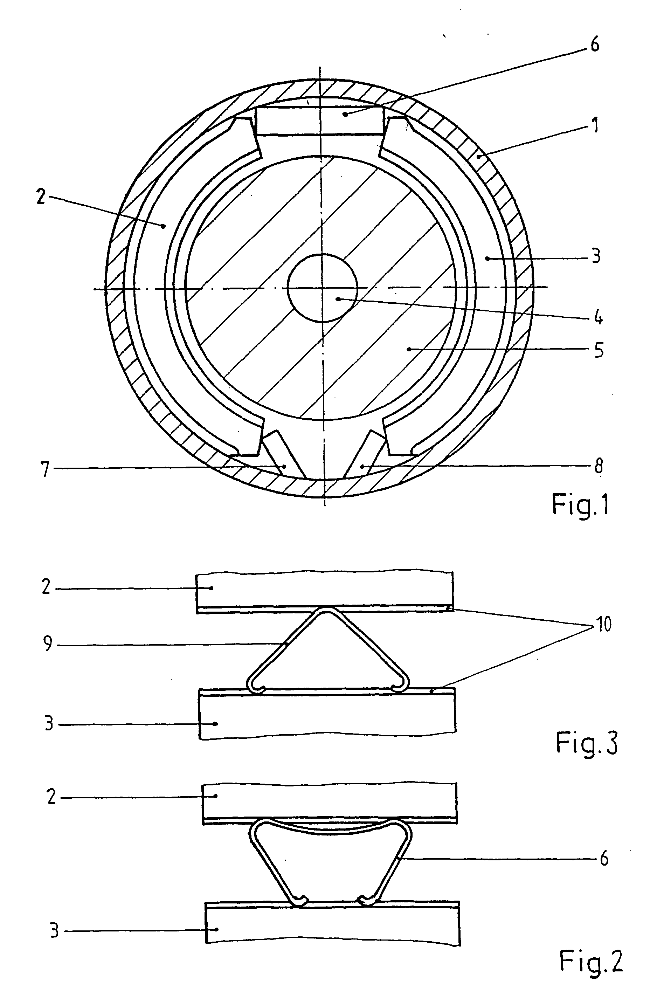

Die Figur 1 zeigt einen Querschnitt durch einen Elektromotor mit zwei in einem Gehäuse 1 befestigten Magnetschalen 2, 3. Zwischen den Magnetschalen 2, 3 ist ein auf einer Motorwelle 4 befestigter Rotor 5 angeordnet. Die Magnetschalen 2, 3 sind mit einem aus einem bandförmigen Material gefertigten Federelement 6 gegen Anschläge 7, 8 des Gehäuses 1 vorgespannt. Die Figur 2 zeigt das Federelement 6 in einer Ansicht von oben mit angrenzenden Bereichen der Magnetschalen 2, 3. Das Federelement 6 liegt an beiden Magnetschalen 2, 3 mit jeweils zwei Anlagepunkten an. Die Endbereiche des Federelementes 6 liegen an einer der Magnetschalen 3 an.

Die Figur 3 zeigt ein Federelement 9, welches an einer der Magnetschalen 2 mit einem Anlagepunkt und an der anderen Magnetschale 3 mit zwei Anlagepunkten anliegt. Das Federelement 9 ist aus einem drahtförmigen Federmaterial gefertigt und durch in den Magnetschalen 2, 3 eingearbeitete Absätze 10 gegen ein Verdrehen gesichert.

## Patentansprüche

1. Elektromotor mit einem zwei Magnetschalen (2, 3) aufweisendem Stator und einem Federelement (6, 9), welches zur Vorspannung der- Magnetschalen (2, 3) des Stators gegen einen feststehenden Anschlag (7, 8) ausgebildet ist, wobei das Federelement (6, 9) an jeder Magnetschale (2, 3) einen Anlagepunkt aufweist und die Anlagepunkte zur Einleitung der Federkraft des Federelementes (6, 9) in die zwei Magnetschalen (2, 3) gegen den feststehenden Anschlag (7, 8) dienen, **dadurch gekennzeichnet,** daß das Federelemente (6, 9) an einer der Magnetschalen (3) einen zweiten Anlagepunkt aufweist und an der anderen Magnetschale (2) zumindest einen Anlagepunkt aufweist.

2. Elektromotor nach Anspruch 1, **dadurch gekennzeichnet,** daß das Federelement (6) auf beiden Seiten jeweils zwei Anlagepunkte aufweist.

3. Elektromotor nach Anspruch 1 oder 2, **dadurch gekennzeichnet,** daß das Federelement (6, 9) aus einem drahtförmigen Federmaterial gefertigt ist.

4. Elektromotor nach zumindest einem der vorhergehenden Ansprüche, **dadurch gekennzeichnet,** daß das Federelement (6,9) aus einem bandförmigen Federmaterial gefertigt ist.

5. Elektromotor nach zumindest einem der vorhergehenden Ansprüche, **dadurch gekennzeichnet,** daß das Federelement (6, 9) jeweils mit seinen Endbereichen an einer der Magnetschalen (3) anliegt.

## Claims

1. Electric motor comprising a stator having two magnet shells (2, 3) and a spring element (6, 9) which is designed for prestressing the magnet shells (2, 3) of the stator against a fixed stop (7, 8), the spring element (6, 9) having a bearing point at each magnet shell (2, 3), and the bearing points serving to introduce the spring force of the spring element (6, 9) into the two magnet shells (2, 3) with respect to the fixed stop (7, 8), characterized in that the spring element (6, 9) has a second bearing point at one of the magnet shells (3) and at least one bearing point at the other magnet shell (2).

2. Electric motor according to Claim 1, characterized in that the spring element (6) has two bearing points on each of the two sides.

3. Electric motor according to Claim 1 or 2, characterized in that the spring element (6, 9) is produced from a wire-shaped spring material.

4. Electric motor according to at least one of the preceding claims, characterized in that the spring element (6, 9) is produced from a strip-shaped spring material.

5. Electric motor according to at least one of the preceding claims, characterized in that the spring element (6, 9) bears in each case with its end regions against one of the magnet shells (3).

## Revendications

1. Moteur électrique comprenant un stator présentant deux coquilles magnétiques (2, 3) et un élément à ressort (6, 9) qui est conçu pour précontraindre les coquilles magnétiques (2, 3) du stator contre une butée fixe (7, 8), dans lequel l'élément à ressort (6, 9) présente un point d'appui sur chaque coquille magnétique (2, 3) et les points d'appui servent à l'introduction de la force de ressort de l'élément à ressort (6, 9) dans les deux coquilles magnétiques (2, 3) contre la butée fixe (7, 8), **caractérisé en ce que** l'élément à ressort (6, 9) présente un deuxième point d'appui sur l'une des coquilles magnétiques (3) et présente au moins un point d'appui sur l'autre coquille magnétique (2).

2. Moteur électrique selon la revendication 1, **caractérisé en ce que** l'élément à ressort (6) présente des deux côtés à chaque fois deux points d'appui.

3. Moteur électrique selon la revendication 1 ou 2, **caractérisé en ce que** l'élément à ressort (6, 9) est fabriqué en un matériau à ressort en forme de fil métallique.

4. Moteur électrique selon au moins l'une quelconque des revendications précédentes, **caractérisé en ce que** l'élément à ressort (6, 9) est fabriqué en un matériau à ressort en forme de ruban.

5. Moteur électrique selon au moins l'une quelconque des revendications précédentes, **caractérisé** **en ce que** l'élément à ressort (6, 9) s'appuie à chaque fois avec ses parties d'extrémité contre l'une des coquilles magnétiques (3).
